# EUROPEAN PATENT APPLICATION

(11) **EP 2 277 824 A2**
(43) Date of publication of application: **26.01.2011**
(21) Application number: 10167670.8
(22) Date of filing: 29.06.2010
(51) Int. Cl.: B82B 3/00

(54) **Modified carbon nanotube arrays**

(30) Priority: 01.07.2009 US 496207
(71) Applicant: Lockheed Martin Corporation, Bethesda, MD 20817 (US)
(72) Inventor: Slinker, Keith A, Keller, TX 76248 (US); Coulter, Kent, Fair Oaks Ranch, TX 78015 (US); Wei, Ronghua, San Antonio, TX 78240 (US)
(74) Representative: Kay, Ross Marcel

(57) **Abstract**

The invention relates to carbon nanotube arrays and methods for the preparation and modification of carbon nanotube arrays. The method includes synthesizing a plurality of carbon nanotubes on a substrate such that the carbon nanotubes are substantially vertically aligned and exposing the array to a plasma to change the topography of the array, change the structure or chemical nature of the individual nanotubes, remove at least a portion of the carbon nanotubes, and/or removing nanotubes to expose monodispserse groupings of nanotubes.

## Description

The present invention relates to a method of fabricating arrays that incorporate carbon nanotubes.

Carbon nanotubes (CNTs) have gained much interest due to the very unique and desirable properties exhibited by the materials, and also by devices that are prepared with or that include CNTs. Carbon nanotubes are very small tube-shaped structures, each having the structure of a graphite sheet rolled that is into a tube. Carbon nanotubes have excellent mechanical properties, such as, a high Young's modulus, a high elastic modulus and low density. In addition, CNTs demonstrate excellent electrical, thermal, electromechanical and absorption properties. Carbon nanotubes can display electronic metallic properties or semiconductor properties according to different ways in which the graphite sheet is rolled. Due to these and other properties, it has been suggested that carbon nanotubes may play an important role in a variety of different fields or applications, such as, microscopic electronics, materials science, biology and chemistry. One specific use that has been suggested for CNTs is as a field emission cathode for the replacement of thermionic cathodes used in microwave tubes.

Carbon nanotubes are also highly desirable due to their ability to form self-assembling linear, forest-like arrays. In addition to the previously noted properties, CNT arrays have also been shown to have extremely low optical reflectivity, excellent emission properties and are compliant yet strong. Thus, they have been suggested for applications such as field emission devices, conformable electrical interconnects and mechanically resilient thermal interconnects. However, these CNT arrays generally show poor adhesion and poor conductivity to the substrates on which they are synthesized, as well as low self-integrity, thereby limiting their potential for use in forming matrices and the fabrication of microelectronic and other devices.

The preparation of monodisperse groupings of nanotubes by a variety of means has been previously reported, however, such prior art methods typically yield inferior products. For example, CNT groupings have been produced by patterning the substrate surface with a catalyst prior to the carbon nanotube synthesis, typically resulting in arrays wherein the minimum lateral dimension is limited. Plasma enhanced chemical vapor deposition methods typically produce nanotubes having poor quality and limited height.

In one aspect, a method is provided for the preparation of a carbon nanotube array. The method includes the steps of providing a substrate suitable for supporting the growth of a plurality of carbon nanotubes and synthesizing a plurality of carbon nanotubes on a surface of the substrate. The carbon nanotubes have a first end and a second end, wherein the first end is attached to the substrate and wherein the plurality of carbon nanotubes forms a forest of substantially aligned nanotubes. The forest of substantially aligned nanotubes is exposed to a plasma source to remove at least a portion of the second end of the carbon nanotubes.

In another aspect a carbon nanotube array is provided. The array includes a plurality of vertically aligned carbon nanotubes on a substrate, wherein the nanotubes include a first end and a second end, and the first end is attached to the substrate. The vertically aligned nanotubes are formed in individual groupings consisting of more than one nanotube and each grouping is spaced apart from an adjacent grouping by at least 1 µm.

At least one embodiment of the invention will now be described, by way of example only, with reference to the accompanying drawings, in which:

Figure 1A is a scanning electron micrograph of the side view of an unmodified carbon nanotube array.

Figure 1B is a scanning electron micrograph of the top view of the unmodified carbon nanotube array of Figure 1A.

Figure 2 is a scanning electron micrograph of the side view of an unmodified carbon nanotube array.

Figure 3A is a scanning electron micrograph of the side view of a modified carbon nanotube array according to one embodiment of the invention.

Figure 3B is a scanning electron micrograph of the top view of a modified carbon nanotube array of Figure 3A.

Figure 4A is a scanning electron micrograph of the side view of a modified carbon nanotube array according to one embodiment of the invention.

Figure 4B is a scanning electron micrograph of the top view of a modified carbon nanotube array of Figure 4A.

Figure 5A is a scanning electron micrograph of the side view of a modified carbon nanotube array according to one embodiment of the invention.

Figure 5B is a scanning electron micrograph of the top view of a modified carbon nanotube array of Figure 5A.

Figure 6A is a scanning electron micrograph of the side view of a modified carbon nanotube array according to one embodiment of the invention.

Figure 6B is a scanning electron micrograph of the top view of a modified carbon nanotube array of Figure 6A.

Although the following detailed description contains many specific details for purposes of illustration, one of ordinary skill in the art will appreciate that many variations and alterations to the following details are within the scope of the invention. Accordingly, the exemplary embodiments of the invention described below are set forth without any loss of generality to, and without imposing limitations thereon, the claimed invention.

Provided herein are methods for the preparation of modified arrays of carbon nanotubes. Generally, CNT arrays are exposed to a plasma source, resulting in the removal of at least a portion of the CNTs present.

Generally, CNT arrays can be produced by means known in the art, for example, chemical vapor deposition (CVD) synthesis or plasma enhanced chemical vapor deposition (PECVD), such as the Black Magic process (Slade Gardner, et al.). The CVD method is known in the art as being conducive for growing CNT arrays having nanotubes that are substantially aligned and form a forest-like growth that is oriented substantially vertical to the surface of the substrate. In the CVD method, a carbon source gas is typically thermally decomposed at a predetermined temperature in the presence of a transition metal that acts as a catalyst, thereby forming a CNT array. Optionally, prior to the synthesis of the CNTs on the substrate, the substrate may be prepared or conditioned by known means to promote the growth and/or attachment on the surface thereof. In certain embodiments, the CNTs deposit or attach in a manner such that the nanotubes only occupy about 10% or less of the total volume. In certain other embodiments, during synthesis the CNTs occupy between about 10% of the total volume above the substrate and about 20% of the total volume above the substrate. In certain embodiments, with post processing techniques, the CNTs can occupy greater than about 50% of the total volume, greater than 75% of the volume, and in certain embodiments, greater than 90% of the total volume. The overall height of the array or forest is generally substantially uniform, however in certain embodiments the ends of the CNTs forming the top surface of the array can become tangled. As synthesized, the CNTs are assumed to substantially have closed ends and are assumed to be substantially chemically inert.

During synthesis, CNTs arrange themselves in substantially aligned vertical arrays. Typically, during preparation of a carbon nanotube array or forest, the length of the individual nanotubes that make up the array is substantially uniform. The length of the nanotubes depends upon the reaction conditions used to prepare the forest. The length of the nanotubes is roughly equivalent to the thickness or height of the CNT array layer as a whole, with the length of the nanotubes being somewhat larger than the thickness of the nanotube array because the individual nanotubes are wavy. Typical techniques for the preparation of CNT arrays result in the formation of substantially uniform arrays, having a uniform number density (i.e., the number of nanotubes per unit volume) and a uniform thickness, which is consistent over a variety of samples. As synthesized, the nanotube arrays are typically substantially defect free and chemically inert.

In certain embodiments, the CNT layer can have a thickness of between about 1 micron and several centimeters. In certain other embodiments, the CNT layer can have a thickness of between about 1 micron and 100 microns. In yet other embodiments, the CNT layer can have a thickness of between about 2 microns and 20 microns. It is understood that as the technology advances, CNT arrays having thicknesses greater than several centimeters will be possible.

Typical substrates for the CNT array can include a variety of suitable known materials. One exemplary substrate material is silicon dioxide (or a silicon substrate that has been oxidized), which provides the advantage of having a surface from which the CNT layer may be easily removed. Optionally, the substrate may be prepared or conditioned prior to beginning the synthesis of the CNT array.

Exposing the CNT array to a plasma may have a variety of effects as the plasma reacts both physically and chemically with the individual carbon nanotubes which make up the array. Accelerated ions in the plasma bombard individual nanotubes, which may result in physical defects in the sidewalls of individual nanotubes. Alternatively, when a CNT array is exposed to certain plasmas, such as a pulsed glow discharge, the ions may react with the CNTs, resulting in the addition of various functional groups on the sidewall of the CNTs, such as hydroxyl, carbonyl, and carboxyl groups. Without wishing to be bound by any particular theory, it is believed that in certain embodiments, the exposure of an individual CNT to a plasma may result in increased reactivity and increased likelihood of functionalization of the CNTs. One exemplary plasma used to modify the CNT array, or individual CNTs, can include an argon plasma operated at a voltage of at least 120V and an amperage of at least 0.5 amps. In certain embodiments, the plasma has at least about 3 KeV of energy, preferably at least 4 KeV of energy, and is exposed for at least 15 minutes, preferably greater than 30 minues.

In addition to increased reactivity of the CNTs, exposure to a plasma may result in structural changes to the tips and/or sidewalls of one or more individual CNT and/or opening of the tube. In some instances, the plasma may result in the creation of an opening in the end of the CNT. In certain embodiments, the structural changes may result in increased reactivity and potential functionalization, however in some instances the structural changes may result in defects in the side walls and/or tips of the CNTs. Alternatively, exposure of the CNT to the plasma may result in the conversion of at least a portion of the carbons present in the CNT to a different state of carbon, e.g., a more amorphous state of carbon.

In other embodiments, exposure of the CNTs to the plasma may result in the removal of a portion of the CNTs, or the removal of portions of individual CNTs, thereby resulting in a reduction in the CNT number density in the array. It is well known that traditional CVD methods for the growth of nanotubes favor large forest-like growths that have a uniform height and uniform density. Thus, as noted previously, traditional methods are not suitable for the preparation of CNT arrays having varying surface topology or monodispersions of CNTs. A CNT array having a reduced number density provides access to the interior of the array, and in certain embodiments, access to the substrate to which the CNTs are applied.

Alternatively, exposure of the CNT array to the plasma can result in the removal of a substantial portion of the CNTs, thereby resulting in mono-disperse groupings of CNTs. This may be the result of the removal of a plurality of the carbon nanotubes present in the array, or the removal of a significant length of more than one carbon nanotube. Thus, in certain instances, one or more CNTs may be removed in their entirety, such that the substrate is exposed, thereby providing mono-disperse groupings that begin at the level of the substrate to which the CNT is attached. These examples may have a number density that is substantially uniform from the substrate to the tips of the nanotubes. Alternatively, in embodiments where only a portion of the individual nanotubes are removed, the number density of the nanotubes remaining present in the array may vary from top to bottom. In certain embodiments, after exposure of the CNT array to the plasma source, the number density may be reduced by about 10%, 20%, 30%, 40%, 50%, 60%, 70%, 80% or 90%. In certain embodiments, about 25% by volume of the CNT array is removed with a plasma. In other embodiments, at least 50% by volume of the CNT array is removed with a plasma.

In certain instances, treating a CNT array with a plasma may result in the fusion of one or more nanotubes. The plasma may cause the fusion at any location along the length of the CNT, most likely between the midpoint and the distal end. The fusion of more than one nanotube may improve the physical self-integrity and/or conductivity of the CNT array or the CNT grouping.

Optionally, various of the modifications disclosed herein can be combined. Thus, in certain embodiments, portions of the nanotube array can be removed such that mono-disperse groupings of nanotubes remain, and these mono-disperse groups can be subsequently modified, functionalized, and/or fused.

Removal of portions of CNTs can result in a variable number density of CNTs through the thickness of the array, wherein the number density is larger at the bottom of the array, near the substrate, and the number density is smaller at the top of the array, where the individual nanotubes are exposed to the plasma. As noted previously the CNT arrays having a reduced number density may be easier to infiltrate with other materials, such as for example, metals, polymer compounds, or the like.

Treating a vertically aligned forest of CNTs with a plasma similarly may result in modification, and in certain instances, functionalization of at least a portion of the individual CNTs in a vertically aligned forest.

In certain embodiments, the CNT array may be exposed to a plasma having sufficient energy and for a sufficient length of time such that the plasma is operable to roughen the top surface and/or at least one side surface of the CNT array. As used herein, a roughened surface refers to a surface that has a varied height and may include craters or holes in the top surface. As synthesized, the CNT array typically includes a plurality of individual CNTs that are substantially the same length, i.e., the length of the CNTs may be within about 20% of each other, preferably within about 15% of each other, and even more preferably within 10% of each other, thereby providing a relatively uniform surface. After roughening of the CNT array surface, the length of the various CNTs may vary by amounts greater than about 20%, and in certain embodiments by amounts greater than about 40%. Alternatively, when the plasma is directed at one or more sides of the CNT array, the resulting surface may have a non-uniform surface that may include indentations and/or holes as a result of the exposure to the plasma.

The roughening of the surface of the CNT array may result in a change in the phobicity of the array. In certain embodiments, the surface and/or side of individual CNT arrays may be modified or have functional groups attached thereto.

Alternatively, exposure of the surface of the CNT array to a plasma can result in the surface becoming detangled. Frequently, during the preparation and synthesis of a CNT array, at least a portion of the ends of the individual CNTs may become tangled. Subsequent treatment of the surface with a plasma can result in the removal of at least a portion of the top layer of the array, thereby providing a plurality of free-standing vertical CNTs, or the removal of the point at which the CNTs have become tangled. Detangling the ends of the individual CNTs can provide improved access to the interior of the array, i.e., to the spaces between and around individual CNTs. This may be beneficial in embodiments wherein materials or compounds, such as polymers or metals, are used to infiltrate the array. In other embodiments, prolonged exposure of the CNT array to the plasma can result in a surface that is worn down or etched away. The amount of surface that can be removed as a result of the exposure to the plasma, by volume, can be up to about 10% of the surface, up to about 20% of the surface, up to about 30% of the surface, up to about 40% of the surface, up to about 50% of the surface, or greater. In certain embodiments, approximately only 5% of the surface is removed. Preferably, the removal of a portion of the surface results in a substantially smooth surface, preferably having a variation in the length of the individual CNTs of less than about 15%, preferably less than about 10% and even more preferably less than about 5%.

Detangling of the surface of the CNT array may provide reactive sites on the surface of the array. The reactive sites may be the result of a broken or changed chemical bond. These reactive sites can then be functionalized, either with the plasma, or alternatively by other means, such as by chemical reactions, as is known in the art. Exemplary compounds that may be appended to the CNT array include, but are not limited to, electron donors, electron acceptors, emitters, or the like. Alternatively, organic functional groups may be added for increased reactivity, or to provide either a hydrophobic or hydrophilic surface, as may be desired. Generally, plasma exposure results in a surface that has increased reactivity to a secondary reaction.

In certain applications, the CNT arrays may be used as field emitters. These applications may function better with CNT arrays that include a plurality of rod like structures that are substantially aligned, rather than uniform CNT films. Exposure of the top of the CNT array to a plasma may decrease the surface uniformity of the CNT film, and may have improved performance as a field emitter. Additionally, field emitters may function better as individual nanotubes or monodispersions, rather than large CNT arrays of uniform density. Plasma preparation of the monodispersions may result in the production of high aspect ratio groupings.

A plasma is a partially ionized gas wherein a portion of the electrons may be free, rather than being bound to an atom or molecule, and may be any known plasma source in the art, such as for example, an argon plasma. In certain embodiments of the present invention, the carbon nanotube array may be exposed to a plasma having a plasma density of at least 10⁻⁸ cm⁻³, preferably at least 10⁻⁶ cm⁻³. Typically, as used herein, the carbon nanotube array is exposed to the plasma at a pressure of less than about 10 militorr. Any known means for generating a plasma are suitable for use with the present invention, including but not limited to, glow discharge, capacitively coupled plasma, inductively coupled plasma, wave heated plasma, arc discharge, corona discharge, dielectric barrier discharge, and the like. Glow discharge plasmas are non-thermal plasmas generated by the application of a DC or low frequency RF electric field between two electrodes.

In certain embodiments wherein the CNT array has been exposed to a plasma for an amount of time suitable to produce discrete monodispersions of CNTs, a metal, ceramic, composite, alloy, or polymer material that partially infuses into the CNT layer can be applied to the array such that the material infiltrates the monodispersions of CNTs. The coating or cap layer can be applied to the free ends of the CNT layer by a variety of known means, such as, vapor phase deposition, including, for example, chemical vapor deposition (CVD) PECVD, or physical vapor deposition. A variety of materials can be applied to the carbon nanotubes by these techniques, particularly metals, such as for example, but not limited to, titanium, aluminum, molybdenum, tungsten, tantalum, nickel, gold, silver, copper, and the like. In certain embodiments, alloys and compounds typically used in the microelectronics industry, including but not limited to, silicon dioxide, silicon-germanium, silicon nitride, silicon oxynitride and titanium nitride, can be applied by vapor phase deposition. In certain embodiments, diamond-like carbon or diamond-like nanocomposite coatings (such as for example, composites that include carbon, hydrogen, silicon and oxygen) can be applied to the ends of the carbon nanotubes by known methods. In certain other embodiments, the metals can be deposited on the surface by magnetron sputter deposition. The process conditions for the vapor phase deposition, such as temperature and power, can be varied to change or modify the resulting coating. In certain embodiments, silicon carbide can be deposited on the surface of the CNT array by CVD techniques. Alternatively, a poly(methylsilyne) can be applied to the CNT surface as a solution and pyrolyzed to achieve the silicon carbide coating.

Example

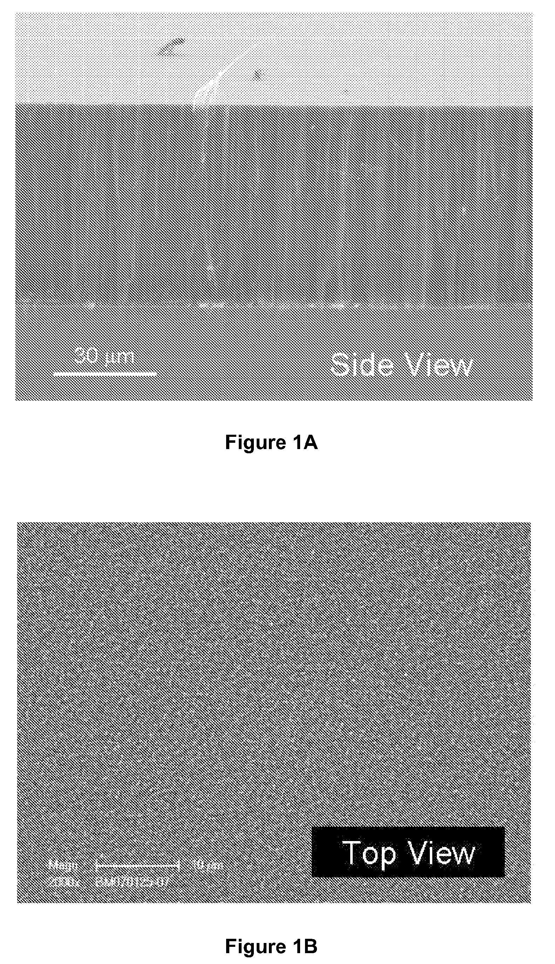

In one exemplary embodiment, as shown in Figures 1A and 1B, a carbon nanotube array is provided. The array is approximately 60 µm thick with the individual nanotubes substantially aligned vertically from the substrate at the bottom of the image. The top view (Figure 1B) shows a generally uniform surface.

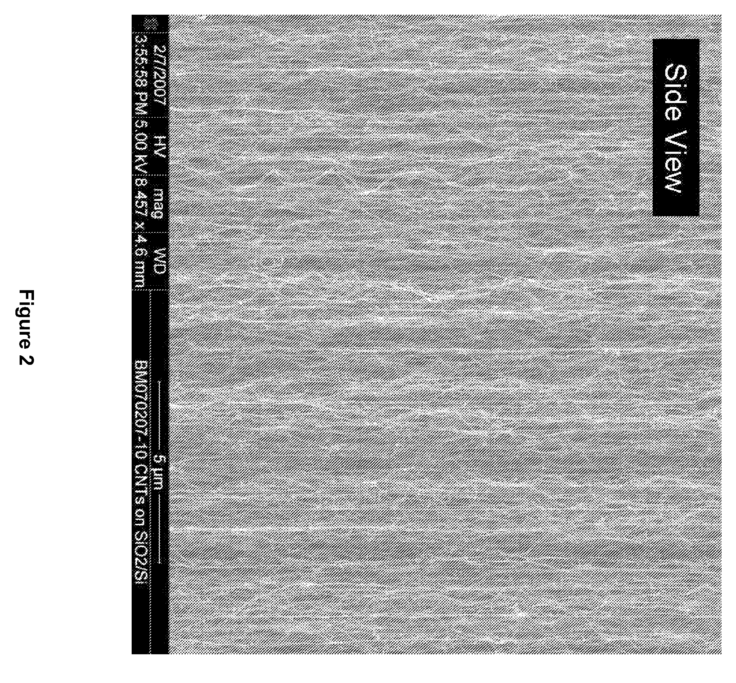

Figure 2 shows a high magnification image of a CNT array. The individual nanotubes can be distinguished in this image and are shown to be substantially aligned from the bottom of the image to the top. In addition to this alignment, the individual nanotubes are generally wavy and make contact with nearby nanotubes through the thickness of the film. This image also demonstrates that the number density of nanotubes is substantially uniform throughout the array.

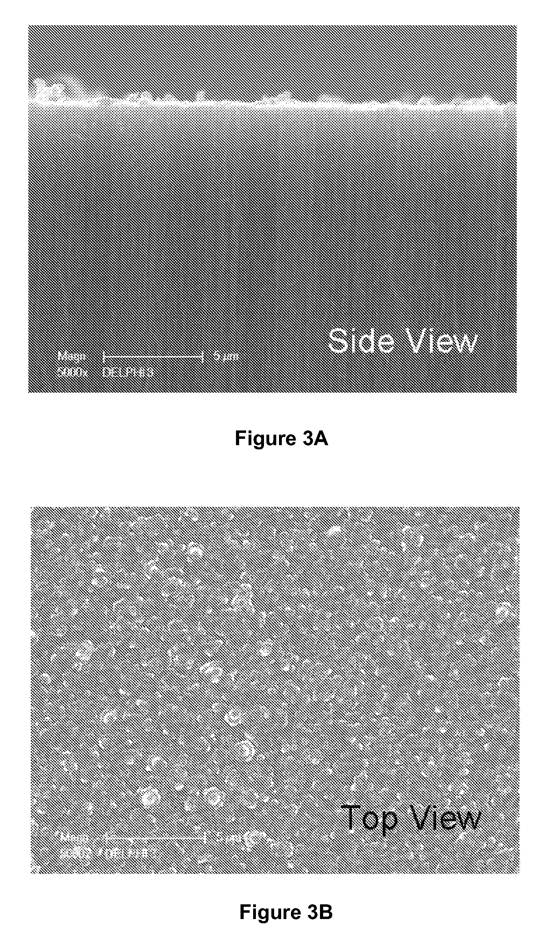

Figures 3A and 3B show the CNT array of Figure 1 after exposure of the CNT array to a first argon plasma (120V, 0.5A) for about one hour, followed by an exposure to a second argon plasma (150V, 1.0A) of about one hour. As can be seen, particularly in Figure 3B, the surface of the CNT array has been roughened, relative to the surface of an unmodified CNT array shown in Figure 1B.

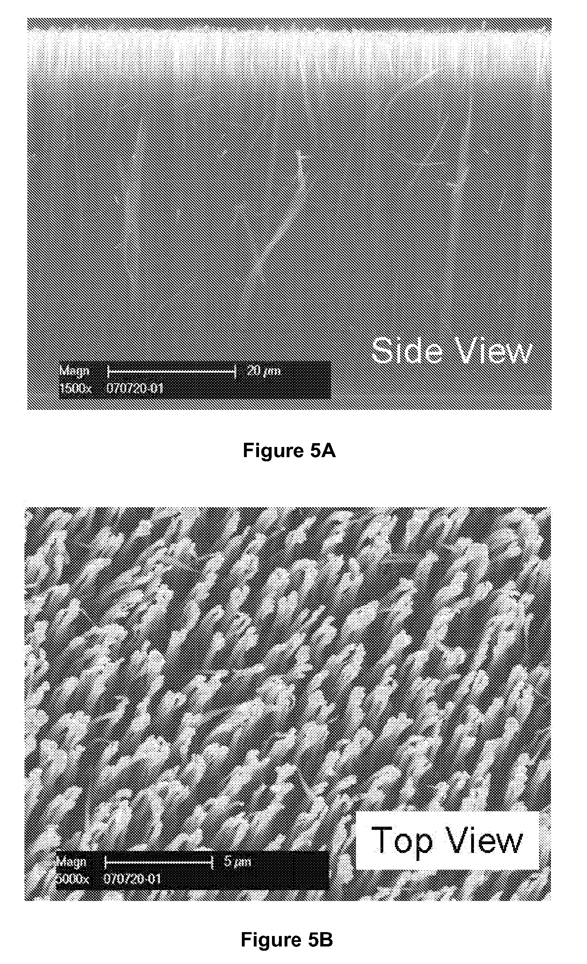

Figures 5A and 5B show a CNT array that has been treated with a 150V, 10A argon plasma for approximately 4 hours. As seen in the Figures, removal of individual CNTs or sections of the CNT array, is achieved in approximately the top 15% of the film, resulting in distances between CNT strands or groupings of CNTs and the adjacent strand or grouping of about 1 µm at the top surface of the film. The overall density of CNTs has been decreased in this region of the film. There is also some evidence from the images that the structure of the CNTs remaining in the array have been altered at their top ends. Approximately the lower 85% of the film is relatively unchanged.

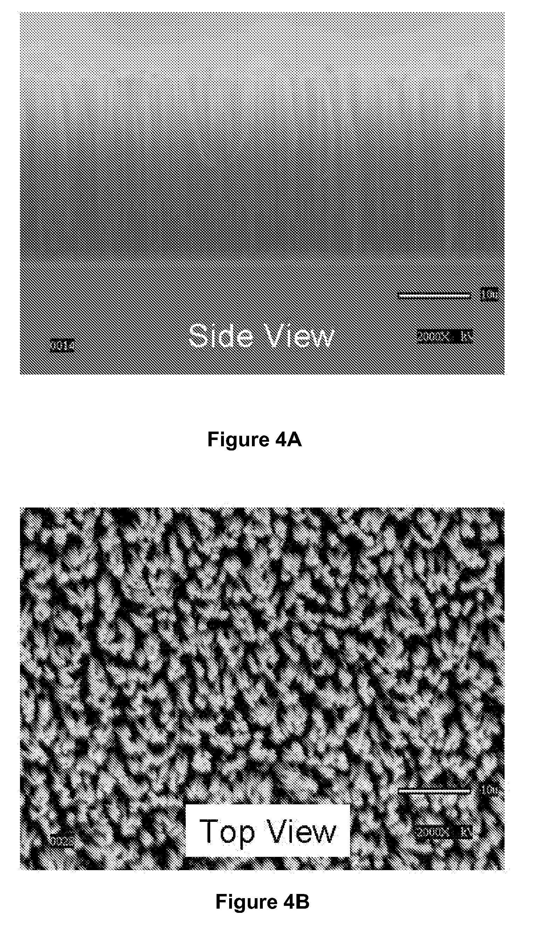

Figures 4A and 4B show a CNT array that has been treated with a 150V, 1.0A argon plasma for 2 hours, followed by treatment with a second argon plasma (150V, 1.0A) for an additional 4 hours. As seen in the Figures, significant removal of carbon nanotubes or nanotube sections has been achieved, resulting in distances between CNT strands or groupings of CNTs and the adjacent strand or groupings of up to about 1 µm at the surface of the film. Additionally, greater amounts of CNT material was removed through approximately the top 40% of the array than the bottom 60% such that the resulting grouping of CNTs are in contact with nearby groupings at the bottom of the array but isolated at the top.

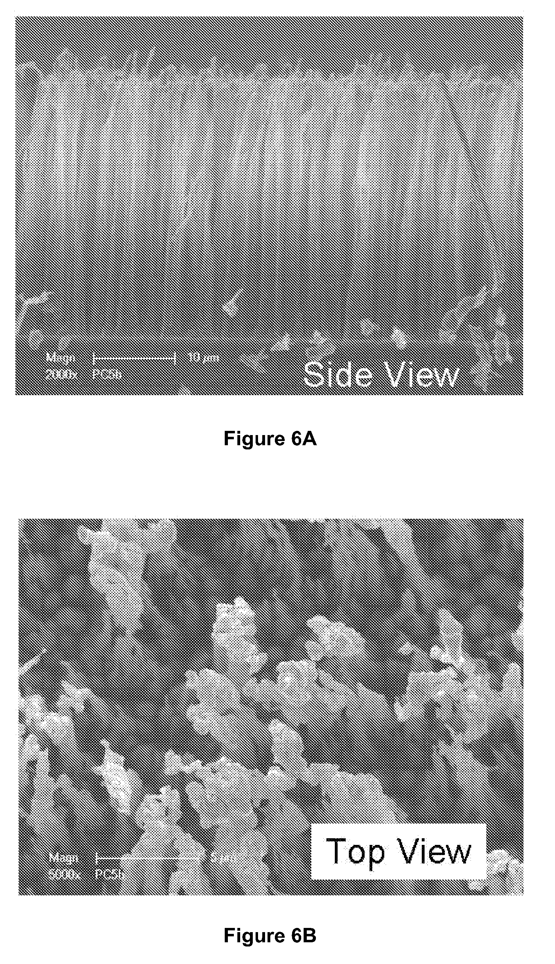

Figures 6A and 6B show a CNT array that has been treated with a 150V, 10.0A argon plasma for about 4 hours. The exposure of the CNT array to a higher power plasma source results in additional distance between individual CNT strands or dispersions. Furthermore, Figure 6A appears to show the removal of CNTs completely from the substrate, thus exposing whole groupings of CNTs. As shown particularly in Figure 6B, the distance between adjacent CNT groupings can exceed 5 µm, and in some instances be as great as about 10 µm. It appears in these images that the top of the CNTs in these groupings may be fused together.

As used herein, nanotubes specifically refers to carbon nanotubes. However, in certain embodiments, CNTs may also refer to graphite nanotubes, and inorganic nanotubes (such as, for example, vanadium oxide, manganese oxide, tungsten disulfide, titanium dioxide, molybdenum disulfide, copper, bismuth, boron nitride, and the like).

Although the present invention has been described in detail, it should be understood that various changes, substitutions, and alterations can be made hereupon without departing from the principle and scope of the invention. Accordingly, the scope of the present invention should be determined by the following claims and their appropriate legal equivalents.

The singular forms "a", "an" and "the" include plural referents, unless the context clearly dictates otherwise.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

Throughout this application, where patents or publications are referenced, the disclosures of these references in their entireties are intended to be incorporated by reference into this application, in order to more fully describe the state of the art to which the invention pertains, except when these reference contradict the statements made herein.

## Claims

1. A method of forming a carbon nanotube array, comprising:
providing a substrate;
synthesizing a plurality of carbon nanotubes on a surface of the substrate, said carbon nanotubes having a first end and a second end, wherein the first end is attached to the substrate and wherein said plurality of carbon nanotubes forms a forest of substantially aligned nanotubes; and
exposing the forest of substantially aligned nanotubes to a plasma to remove at least a portion of the second end from at least a portion of the carbon nanotubes.

2. A method as claimed in Claim 1, wherein exposing the forest of substantially aligned nanotubes to a plasma comprises exposing the forest to pulsed glow discharge.

3. A method as claimed in Claim 1, further comprising exposing the forest to an argon plasma having a 4 keV energy for at least 30 minutes.

4. A method as claimed in Claim 1, further comprising removing at least about 25% of the forest of carbon nanotubes from the array.

5. A method as claimed in Claim 1, further comprising creating a roughened top surface of the carbon nanotube array in response to exposing the forest of substantially aligned nanotubes to a plasma.

6. A method as claimed in Claim 5, wherein the step of creating a roughened top surface of the carbon nanotube array results in a top surface comprising a height variation of at least about 10%.

7. A method as claimed in Claim 5, wherein the step of creating a roughened top surface of the carbon nanotube array results in a top surface comprising a height variation of at least about 25%.

8. A method as claimed in Claim 1, wherein the step of exposing the carbon nanotube array to the plasma reduces the carbon nanotube number density at the second end relative to the carbon nanotube number density at the first end.

9. A carbon nanotube array as claimed in Claim 1, wherein at least one carbon nanotube comprises at least one functional group appended to a sidewall of the at least one carbon nanotube, said functional group being selected from the group consisting of hydroxyl, carbonyl and carboxyl groups.

10. A carbon nanotube array, comprising:
a plurality of vertically aligned carbon nanotubes on a substrate, said nanotubes having a first and a second end, said first end being attached to the substrate; and
wherein the vertically aligned nanotubes are formed in individual groupings consisting of more than one nanotube, and each grouping is spaced apart from an adjacent grouping by at least about 1 µm.

11. A carbon nanotube array as claimed in Claim 10, wherein the spacing between adjacent nanotube groupings is between about 1 and 3 µm.

12. A carbon nanotube array as claimed in Claim 10, wherein the spacing between adjacent nanotube groupings is greater than about 3 µm.

13. A carbon nanotube array as claimed in Claim 10, wherein at least one carbon nanotube comprises at least one functional group appended to a sidewall of the at least one carbon nanotube, said functional group being selected from the group consisting of hydroxyl, carbonyl and carboxyl groups.

14. A method for forming a carbon nanotube array, comprising:
providing a substrate;
depositing a plurality of carbon nanotubes on a surface of the substrate, said nanotubes having a first end attached to the substrate and a second end extending away from the substrate, wherein the plurality of nanotubes are substantially aligned;
exposing the array to a plasma such that the plasma removes at least a portion of the second end of at least a portion of the plurality carbon nanotubes resulting in an array of carbon nanotubes wherein the carbon nanotubes have a height variation of at least 25%.

15. A method as claimed in Claim 14, wherein exposing the array to a plasma results in the fusion of at least one carbon nanotube to an adjacent carbon nanotube.
